# EUROPEAN PATENT SPECIFICATION

(11) **EP 4 501 652 B1**
(45) Date of publication and mention of the grant of the patent: **17.06.2026**
(21) Application number: 23189466.8
(22) Date of filing: 03.08.2023
(51) Int. Cl.: B41J 11/00, B41M 7/00, B41J 15/04

(54) **METHOD FOR DETERMINING A DRYING PROCEDURE OF A PRINTED PRODUCT AND INDUSTRIAL PRINTING MACHINE**
VERFAHREN ZUR BESTIMMUNG EINES TROCKNUNGSVERFAHRENS EINES DRUCKERZEUGNISSES UND INDUSTRIELLE DRUCKMASCHINE
MÉTHODE DE DÉTERMINATION D'UN PROCÉDÉ DE SÉCHAGE D'UN PRODUIT IMPRIMÉ ET MACHINE D'IMPRESSION INDUSTRIELLE

(43) Date of publication of application: 05.02.2025
(73) Proprietor: BOBST MEX SA, 1031 Mex (CH)
(72) Inventor: PEREZ GELLIDA, Francisco Javier, 1260 Nyon (CH)
(74) Representative: Wagner, Sigrid

(56) References cited:
- US-A1- 2009 244 236
- US-A1- 2012 176 435
- US-A1- 2012 287 196
- US-A1- 2014 218 432
- US-A1- 2016 236 485
- US-A1- 2017 087 874
- US-A1- 2019 358 965

## Description

The present invention generally relates to a method for determining a drying procedure of a printed product and an industrial printing machine.

When manufacturing a printed product usually inks having different colors are applied. For subsequent treatment of the printed product, the inks have to be dried first. Several drying techniques are known nowadays, such as convective heating using a stream of hot dry air or infrared (IR) drying using an illumination with light having a wavelength within the IR regime. Note that water-based inks having different colors show different required processing times (time periods during which the drying procedure is applied).

In case of IR drying the processing time may be efficiently shortened by increasing the power of the IR radiation. As most common approaches for drying the printed products aim to optimize the printing speed and/or the ink limit (amount of ink that can be applied per surface unit) only, the processing times during drying are desired to be as short as possible. Since IR drying usually requires less processing times, as the power of the IR radiation may be increased, this technique, consequently, is generally preferred over convective heating for reasons of time efficiency.

However, the higher the printing speed and/or the ink limit, the more power of the IR radiation is required to guarantee specific processing times. As a result of using inks with different colors, the power of the IR radiation is adjusted such that the processing time of the printed product meets the desired processing time (corresponding to a desired printing speed of the underlying manufacturing process), also with regard to that specific ink type of a specific color which requires longest processing times (or vice versa highest IR radiation powers). In this regard, when applying IR radiation for drying, not only the ink but also the substrate of the printed product is heated up. Hence, when increasing the power of the IR radiation for guaranteeing desired processing times (drying times corresponding to specific printing speeds), higher substrate average temperatures are caused. In case of delicate substrates, thus, applying IR heating may result in a bubble formation of the substrate due to the temperature increase of the substrate caused by the high power of the IR radiation. For example, on certain substrate types bubbles may emerge at portions where ink of dark colors was printed as ink of this color usually is most challenging to dry. As a consequence, sustainability is reduced as the rate of defective products is increased.

US 2009/244236 A1 discloses a printing procedure where a drying procedure subsequent to the printing is adjusted in view of amounts of ink applied to unit regions of the printed product. US 2014/218432 A1, US 2019/358965 A1, US 2012/176435 A1, US 2017/087874 A1, US 2012/287196 A1, and US 2016/236485 A1 disclose other generic printing techniques.

Accordingly, there is need for a method and an industrial printing machine which provide an improved drying process such that the rate of defective products is reduced also for IR drying procedures independent of the color specific ink.

The objective technical problem to be solved may be considered to consist in overcoming or at least reducing the disadvantages according to the prior art. In particular, a method and an industrial printing machine are desired, which are capable of increasing sustainability (lowering the rate of defective products) while optimizing the required drying processing times such that high printing speeds and low manufacturing expenses may be achieved.

The problem is solved by the subject matter of the independent claims. Preferred embodiments are indicated within the dependent claims and the following description, each of which, individually or in combination, may represent aspects of the disclosure. Some specifics of the present disclosure are described with regard to devices and others with regard to corresponding methods. However, the advantages and preferred embodiments described with regard to the indicated devices are correspondingly to be transferred to the according methods and vice versa.

According to an aspect, a method for determining a drying procedure of a printed product is provided. The printed product is manufactured by an industrial printing machine. The method comprises at least the following steps of:
An image to be printed is split into several image cells.

For each image cell a total amount of ink to be used and an average lightness value of the ink to be printed within the respective image cell are determined.

For each image cell a cell-dependent amount of infrared (IR) radiation to be applied for drying the ink to be used within the respective image cell is determined based on the total amount of ink to be used and the average lightness value determined in view of the respective image cell.

A mixture of the drying procedure to be applied for drying the ink to be used within the image to be printed is determined based at least on the cell-dependent amounts of IR radiation to be applied and a moving speed of the printed product. The mixture comprises at least a ratio of an overall amount of IR radiation and an overall amount of convective heating.

This means that both factors which influence the required processing time during the drying procedure are considered within the present method. Moreover, based on both factors the drying procedure is tailored to optimize the processing time while guaranteeing appropriate drying of the printed product without damaging the substrate. In this regard, the underlying image is divided into several image cells such that the drying procedure is advantageously adjusted in view of the ink distribution and color distribution across different cells of the printed image. Spoken differently, not only a general drying procedure is determined to be applied but the drying procedure is advantageously tailored in view of each cell of the underlying image. In addition, the moving speed of the printed product is considered. Here, the moving speed refers to a speed of the printed products at which the printed products are transported through the underlying industrial printing machine. Generally, the moving speed depends on the printing speed of a printer head of the industrial printing machine. To maximize productivity of the industrial printing machine, all other components of the industrial printing machine are configured such that maximum printing speeds are obtained. Accordingly, the moving speed of the printed products usually meets the printing speed. By considering the moving speed of the printed products when determining the mixture, the mixture is also tailored such that a certain moving speed of the printed product can be guaranteed. Accordingly, maximum productivity of the industrial printing machine is achieved. In effect, an optimization of the processing time required for drying is achieved while the rate of defective products is reduced. Accordingly, as to the decrease of rate of defective products, the level of sustainability as well as the productivity are improved and the manufacturing expenses are reduced since less damaged products have to be excluded. Therefore, the efficiency of the underlying industrial printing machine is enhanced.

Optionally, the moving speed of the printed product may be predetermined.

In an alternative, the moving speed of the printed product may also be variable.

Furthermore, the moving speed of the printed product may coincide with the printing speed of an industrial printing machine configured to carry out the above described method.

The above described method may also be described in more physical terms: Considering the total amount of ink to be used for each image cell provides the possibility to determine a cell-dependent amount of energy required to evaporate the respective cell content (ink which is applied within the particular cell). By considering the respective cell-dependent average lightness values, the amount of energy required to evaporate the respective cell content is modified as to the heat transfer efficiency which depends on the average lightness value. For example, different lightness values result in different reflection coefficients which have an impact on the heat transfer initiated by IR radiation. Including the moving speed of the printed product when determining the mixture provides the possibility to tailor the power, such as the IR power, such that the energy required to evaporate the respective cell content can be deposited within a time period being determined by the moving speed. Put differently, the power may be adjusted such that a particular moving speed of the printed product can be guaranteed while sufficient energy is deposited to dry the ink applied to the printed product. Taking these considerations into account, the mixture of the drying procedure to be applied for drying the ink to be used within the image to be printed can also be considered to represent a drying power which is to be applied for drying the ink to be used within the image to be printed. This drying power comprises two fractions, one referring to a drying power applied by means of IR radiation and another one referring to a drying power applied by means of convective heating.

Preferably, the ratio of the different portions of the drying power is adapted such that a particular moving speed of the printed product is guaranteed. Thus, an optimized productivity of the above described method is achieved.

The steps of the present method may be conducted during the printing procedure, before actually printing the underlying image, or subsequent to the printing procedure. Since generally the image layout which is to be printed is known sometime before the printing is actually carried out, also the above-mentioned method may be carried out as soon as the image layout is known. Accordingly, the method is preferably carried out before or at least during the printing procedure such that any delay of the manufacturing procedure may be avoided.

Within the present context, an industrial printing machine may also be considered a professional printing device. In other words, the industrial printing machine may be configured to execute professional printing services.

Professional printing services may be considered to not represent home use applications, but to represent printing procedures where the underlying printing layout comprises a resolution of substantially 600 dpi (dots per inch) or higher.

Usually, a large number of images is printed based on a single image layout. The several printed products are formed on a continuous substrate. The substrate is usually provided at an input stage of the industrial printing machine, where raw material is provided, for example on a roll of raw material. In this regard, once the material is continuously treated by the industrial printing machine, the treated material is continuously collected at an output stage. At the output stage, the finished material may be removed from the printing device, for example as a roll of finished material. The drying procedure is performed subsequent to the printing procedure, for example at the drying stage of the industrial printing machine, and before the output stage.

The industrial printing machine may also comprise other stages, such as a cutting stage, and embellishment stage, or the like.

Within the present context, the lightness value may be considered to represent a visual perception of the luminance of the printed object. Put differently, lightness is a prediction of how an illuminated color will appear to a standard observer. While luminance is a linear measurement of light, lightness is a linear prediction of the human perception of that light. The lightness value may in particular be determined based on a specific standard, such as the CIELAB standard, the CIELUV standard, or the CIECAM02 standard.

In some embodiments, the ratio of the mixture determined according to the method may represent a partial fraction of each of the parts forming the ratio. In some cases, the ratio may indicate that the overall amount of IR radiation is 100% while the overall amount of convective heating is 0%. In other cases, the ratio may indicate that the overall amount of IR radiation is 0% while the overall amount of convective heating is 100%. Of course, intermediate values are possible as well.

Preferably, also a cell-dependent amount of convective heating is determined and considered when determining the mixture. This means that the amount of convective heating to be applied for drying the ink of a specific cell may be determined according to a cell-dependent manner. Put differently, for each cell amounts of the IR radiation and convective heating may be determined independently of other cells. The mixture may then better meet the individual requirements for each cell.

Optionally, the mixture is at least partially determined based on a statistical analysis of the cell-dependent amount of infrared radiation to be applied for drying the ink to be used within the respective image cell. For example, a Gauss function may be applied to the cell-dependent IR radiation values to determine an overall amount of IR radiation to be applied. In this regard, the overall amount of IR radiation may represent an average amount of IR radiation to be homogeneously applied to all portions of the printed product.

According to some examples, the mixture is at least partially based on a statistical analysis of the cell-dependent amount of convective heating to be applied for drying the ink to be used within the respective image cell. For example, a Gauss function may be applied to the cell-dependent amounts of convective heating to determine an overall amount of convective heating to be applied. In this regard, the overall amount of convective heating may represent an average amount of convective heating to be homogeneously applied to all portions of the printed product.

In some embodiments, an area of the image cells is smaller or equal to a predetermined threshold value. This means that the threshold value determines an upper limit for the area. Accordingly, the cells are chosen and distributed such that the area of each cell is below the predetermined threshold value.

Accordingly, the drying procedure according to the here described method may be tailored more precisely with regard to specific printing features which area may correspond to the predetermined threshold value.

Preferably, the image cells may comprise a predetermined cell size. The cell size may for example be defined by at least one edge length. The edge length may for example be 5 mm in some cases.

The image cell may have an area which has a rectangular or, preferably, a quadratic shape.

The fragmentation of the image to be printed into several image cells is not actually performed during the printing procedure. Rather, the fragmentation represents an assistant procedure for evaluating the lightness values and the amounts of ink to be printed with regard to each specific image cell.

In some embodiments, the mixture having respective ratios of the drying procedure to be applied for drying the ink is determined in a cell-dependent manner. This provides the possibility to determine a specific mixture for each cell.

In other words, the drying procedure actually applied based on the specific cell- dependent mixture may vary between different cells due to the different amounts of ink supplied and the different lightness values. According to a non-limiting example, a relatively high power of IR radiation may be applied to a left portion of the printed product while relatively low power IR radiation may be applied to the right portion of the printed product in some cases. Accordingly, the fragmentation of the printed image into several cells provides the possibility to not only more appropriately adjust the mixture of the drying procedure in view of the different image cells but also to actually apply different drying procedures for different portions of the printed product, at least along the running direction of the printed products being dried. Accordingly, the efficiency of the drying procedure achieved by the present method is further enhanced.

Optionally, for the overall amount of convective heating a heating time period is determined for which the convective heating is to applied. As a consequence, the determining procedure is simpler as, for example, the temperature of the air applied for performing the convective heating may have a constant temperature.

In this regard, the heating time period may refer to the overall time during which the convective heating is to be applied in view of the printed product. In an alternative, the heating time period may also be of a cell-dependent manner. This means, the heating time period may refer to a time period for which the convective heating is to be applied for a specific cell of the image underlying the printed product.

Preferably, for the overall amount of infrared radiation at least an amount of radiating power to be used is determined. Consequently, the determining procedure is simpler, as for example radiation of a constant wavelength may be used. The amount of infrared radiation may refer to an overall amount of infrared radiation to be applied in view of the entire printed product or may refer to an overall amount of infrared radiation to be applied in view of the specific cell of the image underlying the printed product.

Optionally, when determining the amount of power of IR radiation, the time for which the IR radiation is applied may also be considered. For example, based on a determined or specified moving speed of the printed product within the drying stage of the industrial printing machine an available time period for which the IR radiation may be applied can be determined. The power of the IR radiation may then be determined such that a specific amount of deposited energy due to the IR radiation is achieved.

In some embodiments, the method further comprises the step of determining a printing speed to be used. This offers the possibility to alter the printing speed since the drying procedure may require a specific amount of time for guaranteeing a dried printed product without damaging the substrate thereof. According to a non-limiting example, it may for example be necessary to reduce the printing speed as compared to a maximum printing speed since the drying procedure cannot be achieved within a specific amount of time corresponding to the maximum printing speed.

Optionally, the method may also comprise the step of performing a drying procedure on the printed product, wherein the drying procedure is based on the determined mixture. As a consequence, dried printed products are achieved.

Preferably, the total amount of ink to be used and the average lightness value of the ink to be printed within the respective image cell are determined based on image data representing the image to be printed. That means that the cell-dependent average lightness value and the ink to be printed may be determined as soon the data underlying the image to be printed are available. Since printing jobs comprising image layouts being based on corresponding image data are handled in queues, the method may already be carried out before the specific job is handled by the industrial printing machine. Rather, corresponding to the queue of printing jobs a queue of specific drying procedures determined according to the here described method may be considered.

In some embodiments, a temperature of an IR emitter is determined in view of the overall amount of IR radiation to be applied. It was found that the temperature of the IR emitter influences the dependency on inks having different colors which are used for printing. Therefore, when considering the temperature of the IR emitter, the amount of power of the IR radiation may be determined even more precisely. Hence, the precision of the method is improved.

According to a more sophisticated point of view, the average lightness value of the image to be printed may be denoted as Avg_L*. The total amount of ink to be used may be denoted as Cov. The cell-specific values of these parameters are then denoted as Cell(i)_Avg_L* and Cell(i)_Cov. Here, (i) indicates a specific cell named from 1 to n, where n is the overall number of cells. As a consequence, the IR power to be applied in view of a specific cell Cell(i)_IR may be calculated as Cell(i)_IR = Cell(i)_Avg_L* · Cell(i)_Cov. By that calculation it may be determined how much IR radiation is needed to dry a particular Cell(i).

Without limiting the scope of the present invention, the person of ordinary skill in the art may consider different mathematical expressions, such as different formulae, which may also be used for determining the IR power to be applied in view of a specific cell. However, such different formulae may be considered to be similar to the above mentioned formula as long as they include a cell-specific average lightness value of the image to be printed and a cell-specific total amount of ink to be used or quantities which relate to (such as depend on) these variables as input values.

According to another aspect, an industrial printing machine comprising a control device and a drying stage is provided. The drying stage has at least an IR emitter coupled with the control device and a convective heating device coupled with the control device. The control device is configured to apply a method as described herein before. The advantages which are achieved by the above-mentioned method are likewise achieved by the here described industrial printing machine. In particular, a tailored drying procedure may be determined in view of the ink to be applied and the color distribution of the image to be printed.

Preferably, the IR device comprises an IR emitter such that IR radiation may be emitted.

Optionally, the industrial printing machine comprises a conveyor belt. The conveyor belt is cooperatively coupled with the IR device and/or the convective heating device. Therefore, the speed of the conveyor belt may be adjusted as needed in view of the drying procedure determined according to the above-mentioned method. As a consequence, appropriate drying of printed product may be achieved without damaging the substrate.

In some embodiments, the industrial printing machine further comprises a printer head. The control device is configured to control a printing speed applied by the printer head. Therefore, the printing speed may be adjusted such that it meets the effective speed of the drying procedure according to the above-described method. Moreover, the speed of the conveyor belt may also be adjusted to this speed. In addition, the speed of the conveyor belt and/or the print speed may meet the moving speed of the printed products when being dried.

Preferably, the industrial printing machine comprises different stages, such as an input stage, a printing stage, drying stage, and an output stage. The different stages may be configured for different purposes, such as printing or drying.

Preferably, the industrial printing machine comprises a single motion control configured to control a motion of the material guided through different stages of the industrial printing machine. The control device may be coupled to the single motion control. In an alternative, the single motion control may be a part of the control device. As a consequence, the registration of the processed material in view of the different stages of the industrial printing machine is controlled by a single motion control. Accordingly, the registration of the processed material is simplified and improved such that it is guaranteed that the tools of the different stages are applied to appropriate portions of processed material.

In some embodiments, the IR device is configured such that IR radiation of a specific power may be applied to a specific portion of the printed product. For example, IR radiation of different power may be applied to different portions corresponding to different cells of the image layout underlying the printed product.

Also, in some embodiments the IR device may comprise several IR emitters to simultaneously eliminate several portions of the printed product.

Preferably, the convective heating device is configured such that convective heating may be simultaneously applied to different portions of the printed product. For example, the convective heating device may comprise several outlets through which hot air may be applied.

Optionally, at least one outlet of the convective heating device may be movable. Therefore, an air stream provided through the at least one outlet may be directed to a specific portion of the printed product.

Optionally, the temperature of the IR emitter may also be varied when applying the IR drying procedure. Thus, the dependency on inks having different colors is reduced. In this regard, the control device may be configured to vary the temperature of the IR emitter appropriately.

In some embodiments, the material is guided at a constant speed through the different stages of the industrial printing machine. This means that the material is not needed to be slowed down for drying the printed product by means of the drying stage. Rather, the overall processing speed of the material is adjusted to meet all limitations imposed by the drying procedure, the available range of the speed of the conveyor belt, and the printing procedure. Consequently, downtimes of the industrial printing machine may be avoided.

Preferably, the motion control comprises a unified tension control for the material throughout different stages of the industrial printing machine. Therefore, it is ensured that the material is processed within the entire industrial printing machine having applied a unified tension thereto at different stages of the printing device. Thereby, side effects such as stretching of the material are required to be considered only once since the tension applied to the processed material is homogeneous along the entire printing device.

Optionally, the printer stage comprises a flex or digital inkjet printer device.

These printer devices provide high-quality printed products.

In certain instances, a digital inkjet printer device may be preferred if a contactless printing procedure is desired.

As another option, a thermobonding material may be applied for specific use cases.

The choice of the underlying printer device may also be motivated by the desired type of raw material to be processed.

In some embodiments, a roll of blank (raw) material is provided at the input stage. Therefore, as long as blank material is still available at the input stage, the industrial printing machine may continuously treat the processed material.

Preferably, a roll of finished material is collected at the output stage.

As an alternative, cut and printed products, also named blanks, may be removed from a remainder of the processed material. In this case, a role of waste material is collected at the output stage, whereas the blanks may be removed from the industrial printing machine through a separate outlet.

Preferably, the industrial printing machine may be configured to continuously dry printed products at a predefined minimum processing speed (moving speed). Put differently, the material is guided through the industrial printing machine at a minimum processing speed (moving speed) of more than 30 m/min. Preferably, the minimum processing speed (moving speed) is at least 50 m/min. More preferably, the minimum processing speed (moving speed) is at least 60 m/min.

More preferably, the minimum processing speed (moving speed) is substantially 80 m/min. More preferably, the minimum processing speed (moving speed) is substantially 100 m/min.

The forgoing aspects and further advantages of the claimed subject matter will become more readily appreciated as the same become better understood by reference to the following detailed description when taken in conjunction with the accompanying drawings. In the drawings,
- Fig. 1 is a schematic drawing of an industrial printing machine according to an embodiment, and
- Fig. 2 is a schematic drawing of a method for determining a drying procedure of a printed product according to an embodiment.

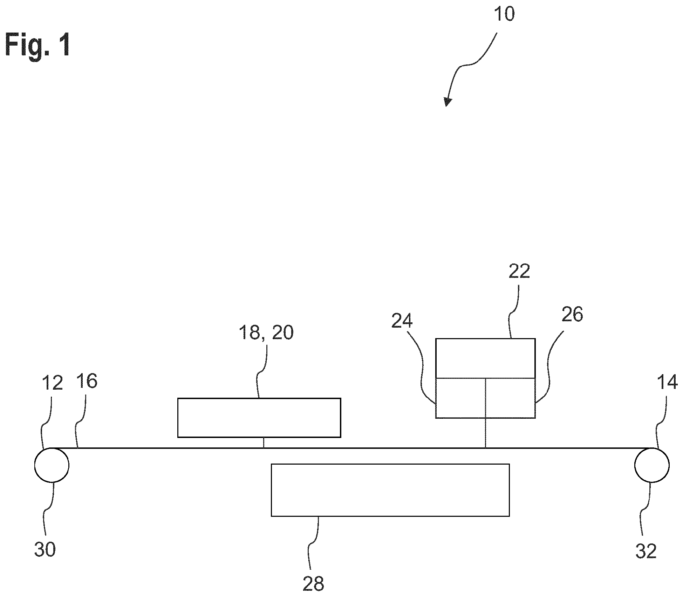

Fig. 1 is a schematic drawing of an industrial printing machine 10 according to an embodiment.

The industrial printing machine 10 comprises an input stage 12, an output stage 14, and a conveyor belt 16.

By means of the conveyor belt 16 a continuous band of material is transported through the industrial printing machine 10.

The industrial printing machine 10 also comprises a printer stage 18 having a printer head 20. Using the printer head 20 images may be printed onto the raw material according to an image layout to be printed.

Moreover, the industrial printing machine 10 comprises a drying stage 22 which is downstream of the printer stage 18. The drying stage 22 comprises at least an IR drying device having an IR emitter 24 and a convective heating device 26 where an air stream of dry hot air is provided.

In addition, the industrial printing machine 10 comprises a control device 28. The control device 28 comprises a single motion control which is configured to guarantee a registration between the material transported by the conveyor belt 16 and the different stages of the machine 10.

The control device 28 is coupled with the printer stage 18 and the drying stage 22. The control device 28 is configured to perform the method described herein before.

The control device 28 is also configured to control an IR power provided by the IR emitter 24 with regard to the IR radiation applied to the material.

The control device 28 is also configured to control the stream of hot dry air provided by the convective heating device 26.

As a consequence, different mixtures of IR drying and convective heating may be applied to different portions of the material.

At the input stage 12, a roll of raw (blank) material 30 is provided. This material is processed as band of material between the input stage 12 and the output stage 14.

At the output stage 14, a roll of finished material 32 is collected.

Due to the printer stage 18 and the drying stage 22, the processed material is also printed and the applied ink is dried accordingly.

According to this embodiment, the printer head 20 comprises a flex or digital inkjet printer device.

In some examples, the industrial printing machine 10 may comprise additional optional stages, such as a cutting stage, a priming stage, a web cleaning stage, a buffer stage, a cold foil stage, an analog or digital embellishment stage, a varnish stage, and a matrix rewinding stage. However, these stages are not relevant for the herein described method.

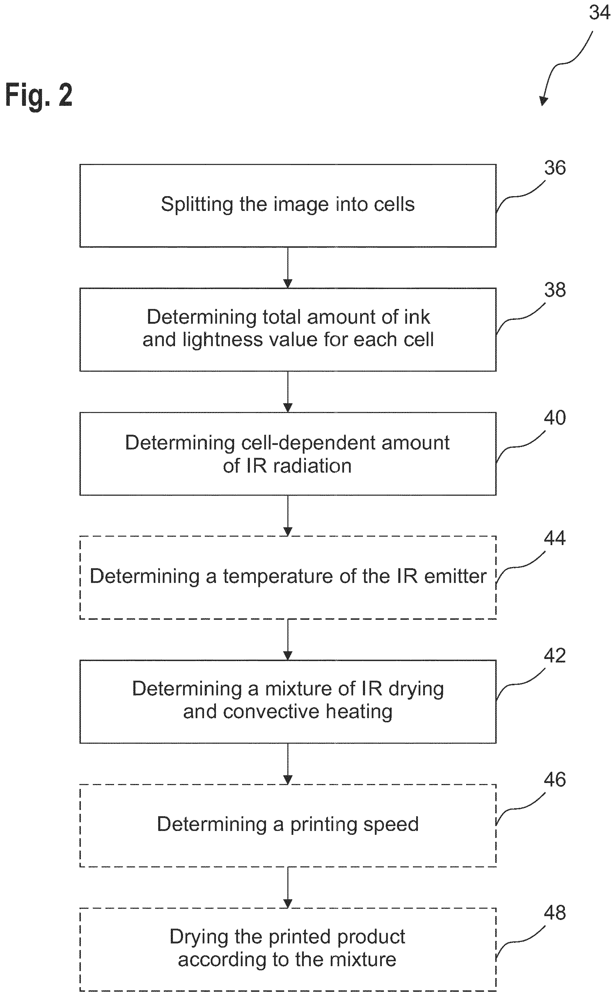

Fig. 2 is a schematic drawing of a method 34 for determining a drying procedure of a printed product according to an embodiment. Optional steps are shown in dashed lines.

In step 36, an image to be printed is split into several image cells. The fragmentation into several image cells may be performed once the data representing the image layout to be printed are available.

In subsequent step 38, for each image cell a total amount of ink to be used and an average lightness value of the ink to be printed within the respective image cell are determined. This step 38 is performed based on the desired colors and lightness values which the image layout indicates. In particular, the lightness value is based on a standard lightness scale, such as CIELAB.

Afterwards, for each image cell a cell-dependent amount of infrared radiation to be applied for drying the ink to be used within the respective image cell is determined in step 40 based on the total amount of ink to be used and the average lightness value determined in view of the respective image cell in step 38.

In step 42, a mixture of the drying procedure to be applied for drying the ink to be used within the image to be printed is determined based at least on the cell-dependent amounts of IR radiation to be applied and a moving speed of the printed product. The mixture comprises at least a ratio of an overall amount of IR radiation and an overall amount of convective heating.

The mixture comprises two portions. A first portion represents IR radiation applied by means of the IR emitter 24. The second portion represents an amount of hot dry air applied by means of the convective heating device 26. This means that the evaluation procedure is based on a cell-dependent analysis such that the drying procedure to be performed may be tailored in view of a varying color and lightness distribution across the printed product as well as the moving speed of the printed product.

In optional step 44, a temperature of the IR emitter 24 is determined in view of the overall amount of IR radiation to be applied. As the temperature of the IR emitter 24 influences the dependency on inks having different colors which are used for printing, the temperature may be included in the method 34 to adjust the mixture appropriately. For determining the temperature IR emitter 24 a sensor may be used.

In an alternative, the temperature of the IR emitter 24 may also be variable in some examples. For example, a cooling and/or heating device may be coupled with the IR emitter 24.

The method 34 may also be varied by including optional step 46, according to which a printing speed of the printing stage 18 to be used is determined. For example, based on the determined mixture, a minimum processing time for drying the printed product is determined. In view of the drying stage 22 of the industrial printing machine 10, a speed of the movement of the conveyor belt 16 may be determined since the raw material 30 is moved at a constant speed through the industrial printing machine 10. Accordingly, the speed of the conveyor belt 16 corresponds to the printing speed to be applied by the printing stage 18.

In an alternative the printing speed of the printing stage 18 may also be predetermined. As the printing speed meets the speed of the conveyor belt 16, this speed may also be used to determine a (minimum) length of the drying stage 22 in view of the mixture determined in view of method 34. Put differently, the speed of the conveyor belt 16 meets the moving speed of the printed product when being dried within the drying stage 22.

The length of the drying stage 22 may be configured such that it meets the condition of a predetermined printing speed in view of an assumption of only applying convective heating in view of the convective heating device 26. For example, some underlying substrates of the printed product may be so specific that IR radiation cannot be applied at all and that only convective heating is applied.

According to additional optional step 48, the method 34 may also be amended in that a drying procedure on the printed product is performed. The drying procedure is based on the mixture comprising the specific ratio determined according to step 42. That means that the IR emitter 24 and the convective heating device 26 of the drying stage 22 are controlled by the control device 28 such that the respective portions of IR radiation and of convective heating of the mixture determined according to step 42 are met. Accordingly, the printed product may be dried without damaging the substrate thereof.

For the purposes of the present disclosure, the phrase "at least one of A, B, and C", for example, means (A), (B), (C), (A and B), (A and C), (B and C), or (A, B, and C), including all further possible combinations when greater than three elements are listed. In other words, the term "at least one of A and B" generally means "A and/or B", namely "A" alone, "B" alone or "A and B".

## Claims

1. A method (34) for determining a drying procedure of a printed product, the printed product being manufactured by an industrial printing machine (10), the method (34) comprising at least the steps of:
- an image to be printed is split into several image cells;
- for each image cell a total amount of ink to be used and an average lightness value of the ink to be printed within the respective image cell are determined;
- for each image cell a cell-dependent amount of infrared radiation to be applied for drying the ink to be used within the respective image cell is determined based on the total amount of ink to be used and the average lightness value determined in view of the respective image cell; and
- a mixture of the drying procedure to be applied for drying the ink to be used within the image to be printed is determined based at least on the cell-dependent amounts of infrared radiation to be applied and a moving speed of the printed product, wherein the mixture comprises at least a ratio of an overall amount of infrared radiation and an overall amount of convective heating.

2. The method (34) of claim 1, wherein for the overall amount of convective heating a heating time period is determined for which the convective heating is to applied.

3. The method (34) of claim 1 or 2, wherein for the overall amount of infrared radiation at least an amount of radiating power to be used is determined.

4. The method of any one of the preceding claims, the method (34) further comprises the step of determining a printing speed to be used.

5. The method (34) of any one of the preceding claims, wherein the total amount of ink to be used and the average lightness value of the ink to be printed within the respective image cell are determined based on image data representing the image to be printed.

6. The method (34) of any one of the preceding claims, wherein a temperature of an infrared emitter (24) is determined in view of the overall amount of infrared radiation to be applied.

7. The method (34) of any one of the preceding claims, wherein an area of the image cells is smaller or equal to a predetermined threshold value.

8. An industrial printing machine (10) comprising a control device (28) and a drying stage (22), the drying stage (22) having at least an infrared emitter (24) coupled with the control device (28) and a convective heating device coupled with the control device (28), wherein the control device (28) is configured to apply a method (34) according to any one of the preceding claims.

9. The industrial printing machine (10) according to claim 8 further comprising a conveyor belt (16), wherein the conveyor belt (16) is cooperatively coupled with the infrared device and/or the convective heating device.

10. The industrial printing machine (10) comprising according to claim 8 or 9, wherein the industrial printing machine (10) further comprises a printer head (20), and wherein the control device (28) is configured to control a printing speed applied by the printer head (20).

## Patentansprüche

1. Verfahren (34) zur Bestimmung eines Trocknungsprozesses für ein Druckprodukt, wobei das Druckprodukt mit einer industriellen Druckmaschine (10) hergestellt wird, wobei das Verfahren (34) mindestens die folgenden Schritte umfasst:
- ein zu druckendes Bild wird in mehrere Bildzellen aufgeteilt;
- für jede Bildzelle werden die Gesamtmenge der zu verwendenden Tinte und ein durchschnittlicher Helligkeitswert der in der jeweiligen Bildzelle zu druckenden Tinte bestimmt;
- für jede Bildzelle wird eine zellenabhängige Menge an Infrarotstrahlung bestimmt, die zum Trocknen der in der jeweiligen Bildzelle zu verwendenden Tinte angewendet werden soll, auf der Grundlage der Gesamtmenge der zu verwendenden Tinte und des durchschnittlichen Helligkeitswerts, der in Bezug auf die jeweilige Bildzelle bestimmt wird; und
- eine Mischung des Trocknungsprozesses, der zum Trocknen der im zu druckenden Bild zu verwendenden Tinte angewendet werden soll, wird mindestens auf der Grundlage der zellabhängigen Menge an anzuwendender Infrarotstrahlung und einer Bewegungsgeschwindigkeit des Druckprodukts bestimmt, wobei die Mischung mindestens ein Verhältnis einer Gesamtmenge an Infrarotstrahlung und einer Gesamtmenge an konvektiver Heizung umfasst.

2. Verfahren (34) nach Anspruch 1, wobei für die Gesamtmenge der konvektiven Heizung ein Heizungszeitraum bestimmt wird, für den die konvektive Heizung angewendet werden soll.

3. Verfahren (34) nach Anspruch 1 oder 2, wobei für die Gesamtmenge der Infrarotstrahlung mindestens eine Menge zu verwendender Strahlungsleistung bestimmt wird.

4. Verfahren nach einem der vorstehenden Ansprüche, wobei das Verfahren (34) ferner den Schritt der Bestimmung einer zu verwendenden Druckgeschwindigkeit umfasst.

5. Verfahren (34) nach einem der vorstehenden Ansprüche, wobei die Gesamtmenge der zu verwendenden Tinte und der durchschnittliche Helligkeitswert der in der jeweiligen Bildzelle zu druckenden Tinte auf der Grundlage von Bilddaten bestimmt werden, die das zu druckende Bild darstellen.

6. Verfahren (34) nach einem der vorstehenden Ansprüche, wobei eine Temperatur eines Infrarotstrahlers (24) unter Berücksichtigung der insgesamt anzuwendenden Infrarotstrahlung bestimmt wird.

7. Verfahren (34) nach einem der vorstehenden Ansprüche, wobei eine Fläche der Bildzellen kleiner oder gleich einem vorbestimmten Schwellenwert ist.

8. Industrielle Druckmaschine (10), umfassend eine Steuervorrichtung (28) und eine Trocknungsstufe (22), wobei die Trocknungsstufe (22) mindestens einen mit der Steuervorrichtung (28) gekoppelten Infrarotstrahler (24) und eine mit der Steuervorrichtung (28) gekoppelte Konvektionsheizvorrichtung aufweist, wobei die Steuervorrichtung (28) so konfiguriert ist, dass sie ein Verfahren (34) nach einem der vorstehenden Ansprüche anwendet.

9. Industrielle Druckmaschine (10) nach Anspruch 8, ferner umfassend ein Förderband (16), wobei das Förderband (16) mit der Infrarotvorrichtung und/oder der Konvektionsheizvorrichtung zusammenwirkend gekoppelt ist.

10. Industrielle Druckmaschine (10), umfassend nach Anspruch 8 oder 9, wobei die industrielle Druckmaschine (10) ferner einen Druckkopf (20) umfasst und wobei die Steuervorrichtung (28) so konfiguriert ist, dass sie eine vom Druckkopf (20) angewendete Druckgeschwindigkeit steuert.

## Revendications

1. Procédé (34) de détermination d'une procédure de séchage d'un produit imprimé, le produit imprimé étant fabriqué par une machine d'impression industrielle (10), le procédé (34) comprenant au moins les étapes suivantes :
- une image à imprimer est divisée en plusieurs cellules d'image ;
- pour chaque cellule d'image une quantité totale d'encre à utiliser et une valeur de luminosité moyenne de l'encre à imprimer dans la cellule d'image respective sont déterminées ;
- pour chaque cellule d'image une quantité de rayonnement infrarouge à appliquer, qui dépend du type de cellule, pour sécher l'encre à utiliser dans la cellule d'image respective est déterminée sur la base de la quantité totale d'encre à utiliser et de la valeur de luminosité moyenne déterminée compte tenu de la cellule d'image respective ; et
- un mélange de la procédure de séchage à appliquer pour sécher l'encre à utiliser dans l'image à imprimer est déterminé au moins sur la base au moins des quantités de rayonnement infrarouge à appliquer, qui dépendent du type de cellule, et d'une vitesse de déplacement du produit imprimé, dans lequel le mélange comprend au moins un rapport entre une quantité totale de rayonnement infrarouge et une quantité totale de chauffage par convection.

2. Procédé (34) selon la revendication 1, dans lequel pour la quantité totale de chauffage par convection une période de chauffage est déterminée pendant laquelle le chauffage par convection doit être appliqué.

3. Procédé (34) de la revendication 1 ou 2, dans lequel pour la quantité totale de rayonnement infrarouge au moins une quantité de puissance rayonnante à utiliser est déterminée.

4. Procédé selon l'une quelconque des revendications précédentes, le procédé (34) comprend en outre l'étape de détermination d'une vitesse d'impression à utiliser.

5. Procédé (34) selon l'une quelconque des revendications précédentes, dans lequel la quantité totale d'encre à utiliser et la valeur de luminosité moyenne de l'encre à imprimer dans la cellule d'image respective sont déterminées sur la base de données d'image représentant l'image à imprimer.

6. Procédé (34) selon l'une quelconque des revendications précédentes, dans lequel une température d'un émetteur infrarouge (24) est déterminée compte tenu de la quantité totale de rayonnement infrarouge à appliquer.

7. Procédé (34) selon l'une quelconque des revendications précédentes, dans lequel une zone des cellules d'image est inférieure ou égale à une valeur seuil prédéterminée.

8. Machine d'impression industrielle (10) comprenant un dispositif de commande (28) et une phase de séchage (22), la phase de séchage (22) présentant au moins un émetteur infrarouge (24) couplé au dispositif de commande (28) et un dispositif de chauffage par convection couplé au dispositif de commande (28), dans lequel le dispositif de commande (28) est configuré pour appliquer un procédé (34) selon l'une quelconque des revendications précédentes.

9. Machine d'impression industrielle (10) selon la revendication 8 comprenant en outre un convoyeur (16), dans laquelle le convoyeur (16) est couplé de manière coopérative au dispositif infrarouge et/ou au dispositif de chauffage par convection.

10. Machine d'impression industrielle (10) comprenant selon la revendication 8 ou 9, dans laquelle la machine d'impression industrielle (10) comprend en outre une tête d'impression (20) et dans laquelle le dispositif de commande (28) est configuré pour commander une vitesse d'impression appliquée par la tête d'impression (20).
